# EUROPEAN PATENT APPLICATION

(11) **EP 2 469 462 A2**
(43) Date of publication of application: **27.06.2012**
(21) Application number: 11194582.0
(22) Date of filing: 20.12.2011
(51) Int. Cl.: G06Q 30/02

(54) **A method and a system for analysing traffic on a website**

(30) Priority: 21.12.2010 US 974736
(71) Applicant: Sitecore A/S, 1606 Copenhagen V (DK)
(72) Inventor: Seifert, Michael, DK-2920 Charlottenlund (DK)
(74) Representative: Inspicos A/S

(57) **Abstract**

A method and a system for analysing traffic on a website are disclosed, the website being arranged on a server. The method comprises the steps of allowing a visitor to visit the website, and monitoring navigations and/or actions performed by the visitor during the visit while accumulating value points in accordance with content viewed by the visitor and actions performed by the visitor, and in accordance with predefined value point settings associated with content of the website, thereby obtaining an accumulated value point score for the visit. An origin of the visit, leading the visitor to the website, is registered and stored along with the accumulated value point score. Finally, the stored information is categorised in accordance with two or more predefined categories of origin. Thereby the website owner obtains information regarding where value generated during visit originates from.

Furthermore, a method is disclosed in which the visitor is subjected to one or more tests during the visit, and the accumulated value point score is stored along with information regarding the test(s) which the visitor was subjected to.

## Description

### FIELD OF THE INVENTION

The present invention relates to a method and a system for analysing traffic on a website, wherein visits to the website are categorised according to origin of the visits, and information regarding origin of the visits is stored along with value point scores accumulated during each visit.

### BACKGROUND OF THE INVENTION

For website owners it is often desirable to be able to analyse the traffic on a website, e.g. in order to determine where the traffic originates from, which advertising campaigns were successful in guiding visitors to the website, etc. It may also be desirable for website owners to investigate whether or not certain goals of the website are obtained by the traffic on the website. Such goals may, e.g., include visitors purchasing or ordering products or services, filling in a contact form, requesting a web based demo, ordering a catalogue, staying at the website for a specific time period, etc.

Various analytic tools exist which provide the website owner with information regarding the amount of traffic on the website, including the origin of the traffic. Google^{®} Analytics is one example of such a tool. However, these tools provide no information regarding the quality of the traffic, i.e. it is not possible to derive which part of the traffic was successful with respect to achieving the goals of the website owner.

US 2008/0306830 A1 discloses a system for determine session, visitor, advertiser and/or website click quality scores. The system uses a script included in each page of each website monitored by the system to capture data. A method for determining whether a goal is achieved may include assigning a website goal associated with access to a category of a page and recording the achievement of the goal or goals, when a visitor in session accesses a page or pages of the specified category. A subsystem may assist in analysing the quality of visitors, the quality of visitors referred by a particular source, and the quality of a website, including any effects of changes made to the website or in comparison to other websites monitored by the system.

US 6,792,458 B1 discloses a system and method for monitoring and analysing Internet traffic. In one embodiment the system and method include e-commerce analysis and reporting functionality, in which data from standard traffic logs is received and merged with data from e-commerce systems. The system and method can produce reports showing detailed "return on investment" information, including identifying which banner ads, referrals, domains, etc. are producing specific dollars.

None of the prior art documents cited above describe systems or methods providing information to website owners about correlation between value of visits and type of origin of the visit.

### DESCRIPTION OF THE INVENTION

It is an object of embodiments of the invention to provide a method for analysing traffic on a website, which allows a website owner or manager to obtain detailed information regarding origin of generated value at the website.

It is a further object of embodiments of the invention to provide a method for analysing traffic on a website, which enables a website owner or manager to target his or her marketing effort in a manner which is likely to create value for the website owner.

It is an even further object of embodiments of the invention to provide a method for analysing traffic on a website, which enables a website owner to relate various types of marketing efforts, such as Search Engine Optimization (SEO) or social media effort, to value generated at the website.

It is an even further object of embodiments of the invention to provide a system for analysing traffic on a website, which allows a website owner or manager to obtain detailed information regarding origin of generated value at the website.

It is an even further object of embodiments of the invention to provide a system for analysing traffic on a website, which enables a website owner or manager to target his or her marketing effort in a manner which is likely to create value for the website owner.

It is an even further object of embodiments of the invention to provide a system for analysing traffic on a website, which enables a website owner to relate various types of marketing efforts, such as Search Engine Optimization (SEO) or social media effort, to value generated at the website.

According to a first aspect the invention provides a method for analysing traffic on a website, the website being arranged on a server, the method comprising the steps of:
- allowing a visitor to visit the website,
- monitoring navigations and/or actions performed by the visitor during the visit while accumulating value points in accordance with content viewed by the visitor and actions performed by the visitor, and in accordance with predefined value point settings associated with content of the website, thereby obtaining an accumulated value point score for the visit,
- registering an origin of the visit, leading the visitor to the website,
- storing the accumulated value point score along with the registered origin of the visit in a storage device of the server, and
- categorising the stored accumulated value point score and the origin of the visit according to type of origin in accordance with two or more predefined categories of origin.

In the present context the term 'website' should be interpreted to mean a collection of related web pages, images, videos or other digital assets being addressed relative to a common Uniform Resource Locator (URL). The web pages of the website may advantageously be designed, presented and linked together to form a logical information resource and/or transaction initiation function. According to the first aspect of the invention, the website being managed is arranged on, or hosted on, a server. The server, and thereby the website, is typically accessible via a data network, such as the Internet or a Local Area Network (LAN). It should be noted that, in the present context, the term 'server' should be interpreted to cover a single device as well as two or more individual devices being interlinked in such a manner that they, to a visitor of the website, seem to act as a single device.

According to the method of the first aspect of the invention, a visitor is initially allowed to visit the website. During the visit, the navigations and/or actions performed by the visitor are monitored, while accumulating value points. Value point settings have previously been associated with content of the website, and the value points of a given visit are accumulated in accordance with these settings, and in accordance with the navigations and/or actions performed by the visitor. Thus, when a visitor encounters a specific piece of content, the value points, for the visit, are adjusted with an amount corresponding to the value point setting associated with that piece of content.

In the present context the term 'content' should be interpreted to include anything which a visitor may experience during a visit to the website, including content presented to the visitor, such as web pages, images, video sequences, audible sequences, etc., actions performed by the visitor, including forms being filled in, searches performed within the website, tests, polls, submitting comments, rating pages, etc., or any other kind of content which the visitor may experience or encounter during a visit to the website.

Accordingly, at the end of a visit, an accumulated value point score has been obtained, which reflects the value points 'collected' by the visitor during the visit. If the value point settings are selected and assigned in an appropriate manner, the accumulated value point score may reflect the value which the visit generated to the website owner, i.e. it is a measure for how valuable the visit was. It should be noted that a visit may result in no value points being collected, i.e. the value point score for the visit is zero. This may, e.g., occur if the visitor does not encounter content which gives rise to value points.

The value points may, e.g., be numeric values. Alternatively, they may reflect a ratio between value points on content. The value points may advantageously correlate with the successful completion of the website's objective.

Furthermore, an origin of the visit, leading the visitor to the website, is registered. The origin of the visit provides information regarding where the traffic came from. It may, e.g., be a specific search engine, a direct entry via the browser, following a link in a web advertisement, following a link in an e-mail campaign, following a link from a blog, etc.

The accumulated value point score is then stored in a storage device of the server, along with the registered origin of the visit. Thus, correlated information of value of the visit and origin of the visit is stored.

Finally, the stored accumulated value point score and the origin of the visit are categorised according to type of origin in accordance with two or more predefined categories of origin. Thereby the website owner or manager obtains information, not only of where the value came from, but also of which type of origin the value came from. This allows the website owner or manager to perform intelligent data mining or statistical analysis of the information. Thereby it is possible for the website owner to identify which types of origin result in value for the website owner, and which types of origin do not. Furthermore, it is possible to perform similar analysis within each category of origin.

The categories of origin may, e.g., include various kinds of referral sites, such as search engines (e.g. Google or Bing), blogs (e.g. Blogspace or Blogger), news sites (e.g. MSNBC or CNN), chat sources (e.g. Twitter or Buzz), community sites (e.g. LinkedIn or Facebook), Wiki sites (e.g. Wikipedia or Wikihow), analyst sites (e.g. Gartner or Forrester), e-mail traffic, RSS traffic, paid traffic (e.g. web based advertisements), etc. Alternatively or additionally, the categories of origin may include direct access to the website by typing the address of the website directly in the browser.

The origin of the visit may include a referral which referred the visitor to the website. The referral may be another website, e.g. a search engine, a web based advertisement, a blog, an e-mail campaign, etc. Alternatively or additionally, the origin of the visit may include directly typing the address of the website into the browser.

The method may further comprise the steps of:
- registering one or more search keywords applied by the visitor, and
- storing the registered search keyword(s) along with the accumulated value point score and the registered origin of the visit.

In the case that the origin of the visit was a referral from a search engine, it may be desirable for the website owner or manager to know which search keywords the visitor applied, and which eventually led the visitor to the website via the search engine. This may also provide information to the website owner or manager regarding awareness of the company and/or company name.

The categories of origin may be extended with search engines where the search term contains the company brand (search engine branded searches) and search engines where the search term does not contain the company brand (search engine organic searches).

According to one embodiment, the presence or absence of specific search keywords can affect the category of origin.

The method may further comprise the steps of:
- registering visit information, and
- storing the registered visit information along with the accumulated value point score and the registered origin of the visit.

Visit information may, e.g., include a browser used by the visitor, a device used by the visitor, such as PC, cell phone, tablet, TV, etc., GeoIP, user agent of the visitor, visit number, etc. According to this embodiment, the analysis of the stored data may also be performed on the basis of the visit information. For instance, such analysis may reveal that visitors using one kind of browser are successful and obtain high value point scores, while visitors using another kind of browser obtain significantly lower value point scores. This may prompt the website owner or manager to investigate whether the website includes some features which are inexpedient when the latter browser is used during a visit. Once such features have been identified, the website owner or manager may amend the content of the website to make it as expedient to use the latter browser as the first. Thereby the value point scores from the visitors using the latter browser may be significantly increased, and these visitors may even be encouraged to return to the website at a later point in time, thereby increasing the value generated for the website owner even further.

The method may further comprise the steps of:
- analysing stored and categorised accumulated value point scores and origins of the visits originating from a plurality of visits to the website, and
- generating a report providing information regarding value point scores originating from the predefined categories of origin.

According to this embodiment, a report is generated on the basis of information originating from a plurality of visits. The report reveals how the stored value point scores relate to the predefined categories of origin. Thereby the report allows the website owner or manager to determine which categories of origin gives rise to high value point scores, and which categories of origin gives rise to low value point scores. Once this has been determined, the website owner or manager may investigate why some of the categories are more successful in providing visitors generating high value point scores than other. The website owner or manager may then decide to focus marketing efforts on the more successful categories of origin and/or he or she may attempt to amend the website to become more appealing to the visitors originating from origins belonging to the less successful categories of origin. In some cases the categories of origin may correspond to marketing efforts by specific marketing departments or hired agencies. In this case the obtained information may be used for understanding which departments or consultants need to either improve or scale down such that marketing funds can be used more efficiently in other categories.

The analysis may include calculating the average value accumulated per visit. This may provide a measure of the quality and efficiency of the content of the website with respect to fulfilling business goals of the website owner.

The method may further comprise the step of generating at least one sub-report providing information regarding value point scores originating from various origins of visits within a predefined category of origin. According to this embodiment, the available data is further 'drilled down' in order to provide more detailed information to the website owner or manager. Thus, it is not only possible for the website owner or manager to investigate which categories of origin are successful or unsuccessful, it is also possible to investigate whether or not some origins within a given category of origin are significantly more or less successful than the other origins within that category of origin. The website owner or manager may then investigate why the successful origins are successful and why the unsuccessful origins are unsuccessful. Once this has been determined, the website owner or manager may determine to focus marketing effort on the successful origins and/or to attempt to amend the website to become more appealing or easier to use for visitors from the less successful origins.

The method may further comprise the step of storing the categories of origin in the storage device of the server. According to this embodiment, the stored categories of origin can be used later, e.g. when further visitors visit the website, thereby allowing such further visitors to be categorised in accordance with the stored categories of origin.

The predefined value point settings may reflect value obtained by the owner of the website due to navigations and/or actions performed by the visitor during the visit. According to this embodiment, the website owner or manager define the value point setting in such a manner that navigations and/or actions which the website owner want the visitor to perform and/or which generate value for the owner of the website, generate a high value point score. Accordingly, a high value point score for a visit indicates that the website owner gained a lot of value from the visit. Examples of high value behaviour may include, but is not limited to, purchasing a product via the website, requesting a web based demo, ordering a catalogue, requesting a personal contact, visiting at least a predefined number of web pages of the website, etc.

The method may further comprise the steps of:
- the visitor being subjected to one or more tests during the visit, and
- storing information regarding the test(s) which the visitor was subjected to in the storage device of the server along with the accumulated value point score and the registered origin of the visit.

According to this embodiment, some of the navigations and/or actions performed by the visitor during the visit include one or more tests. Information regarding the test(s) is stored along with the accumulated value point score for the visit. The information regarding a test may simply be information that the visitor was subjected to that specific test. Additionally, the information may include a score obtained by the visitor, whether or not the visitor completed the test and/or other relevant information regarding the test.

In the present context the term 'test' should be interpreted to mean a method of evaluating the effect of different variations of content on the behaviour of visitors on the website. This may enable the website owner or manager to learn which variation is more effective in achieving the desired goals of the website.

The method may further comprise the steps of:
- analysing stored test information and value point scores originating from a plurality of visits, and
- generating a report providing information regarding a relationship between accumulated value point scores and various test cases.

According to this embodiment, the website owner or manager obtains information regarding how being subjected to a specific test affects the value point score of the *entire* visit, via the generated report. If it turns out that a specific test results in significantly reduced value point scores, then the website owner or manager may consider removing that test from the website or altering the test in order to reduce or remove the adverse effect which was apparently caused by the test. Similarly, if it turns out that a specific test results in significantly increased value point scores, then the website owner or manager may consider amending the website in such a manner that more, possibly all, visitors are subjected to the test. One important advantage is that by correlating entire value point score for the entire visit with the specifics of one or more tests that are simply a part of the entire visit experience, it is possible to much more accurately assess the test results. Thus, instead of focusing purely on whether a test makes a user click a particular link or fill out a particular form, the website owner can now assess the effect of the test on the entire visit.

The categorising step may be performed on a remote server, and the method may further comprise the step of communicating the registered origin of the visit to the remote server. According to this embodiment, the categorising step may be performed by an external supplier performing similar services for a number of other website owners, rather than by the website owner. Alternatively, the website owner may own several websites, and may wish to perform the categorising step centrally for all of the websites. One advantage of this embodiment is that the remote server will most likely categorise significantly more origins than corresponding to visits to a single website. Therefore the remote server is more likely to be able to recognise a given origin and thereby be able to categorise the origin correctly. Furthermore, in the case that the remote server is in doubt with respect to the category of a given origin, a request may be referred back to the website owner or manager of the website where the visit took place to manually categorise the origin. When this information is provided to the server, the server will know how to categorise this origin the next time it occurs, even if it occurs from a different website owner. Thereby fast and accurate categorisation can be obtained.

According to a second aspect the invention provides a method for analysing traffic on a website, the website being arranged on a server, the method comprising the steps of:
- allowing a visitor to visit the website,
- monitoring navigations and/or actions performed by the visitor during the visit while accumulating value points in accordance with content viewed by the visitor and actions performed by the visitor, and in accordance with predefined value point settings associated with content of the website, thereby obtaining an accumulated value point score for the visit,
- the visitor being subjected to one or more tests during the visit, and
- storing the accumulated value point score along with information regarding the test(s) which the visitor was subjected to in a storage device of the server.

This has already been described in detail above with reference to the first aspect of the invention.

The method may further comprise the steps of:
- analysing stored test information and value point scores originating from a plurality of visits, and
- generating a report providing information regarding a relationship between accumulated value point scores and various test cases.

As described above with reference to the first aspect of the invention, this allows the website owner or manager to determine how being subjected to a given test affects the accumulated value point score. Thereby the website owner can decide to remove or improve 'bad' tests and/or to amend the website to encourage visitors to take 'good' tests, as described above.

According to a third aspect the invention provides a system for analysing traffic on a website arranged on a server, the system comprising:
- a monitoring module adapted to monitor navigations and/or actions performed by a visitor during a visit to the website, said monitoring module further being adapted to accumulate value points in accordance with content viewed by the visitor and actions performed by the visitor, and in accordance with predefined value point settings associated with content of the website, thereby obtaining an accumulated value point score for the visit, and being adapted to register an origin of the visit, leading the visitor to the website,
- a storage device arranged on the server for storing accumulated value point scores along with registered origin of the visit, for each visit, and
- a categorising module adapted to categorise stored accumulated point scores and origins of visits according to type of origin in accordance with two or more predefined categories of origin.

It should be noted that a person skilled in the art would readily recognise that any feature described in combination with the first aspect of the invention could also be combined with the second or third aspects of the invention, that any feature described in combination with the second aspect of the invention could also be combined with the first or third aspects of the invention, and that any feature described in combination with the third aspect of the invention could also be combined with the first and second aspects of the invention.

The system of the third aspect of the invention may advantageously be adapted to perform the method of the first aspect of the invention and/or the method of the second aspect of the invention. Thus, the remarks set forth above with reference to the first and second aspects of the invention are equally applicable here.

The categorising module may form part of the monitoring module. According to this embodiment, the categorising is performed locally.

The system may further comprise an analysing module adapted to analyse stored and categorised accumulated value point scores and origins originating from a plurality of visitors.

The analysing module may form part of the monitoring module. As an alternative, the analysing module may be a separate module.

The system may reside on the server having the website arranged thereon.

The categorising module may be arranged on a remote server, and the system may further comprise communication connections between the server having the website arranged thereon and the remote server, said communication connections allowing the monitoring module to communicate with the remote server and the categorising module. This allows the categorising step to be performed remotely as described above with reference to the first aspect of the invention.

### BRIEF DESCRIPTION OF THE DRAWINGS

The invention will now be described in further detail with reference to the accompanying drawings in which
Fig. 1 is a diagrammatic view of a system according to an embodiment of the invention,
Fig. 2 is a diagrammatic view of a system according to another embodiment of the invention,
Fig. 3 is a diagrammatic view of a system according to yet another embodiment of the invention,
Fig. 4 is a flow diagram illustrating a method according to an embodiment of the invention, and
Fig. 5 is a flow diagram illustrating a method according to another embodiment of the invention.

### DETAILED DESCRIPTION OF THE DRAWINGS

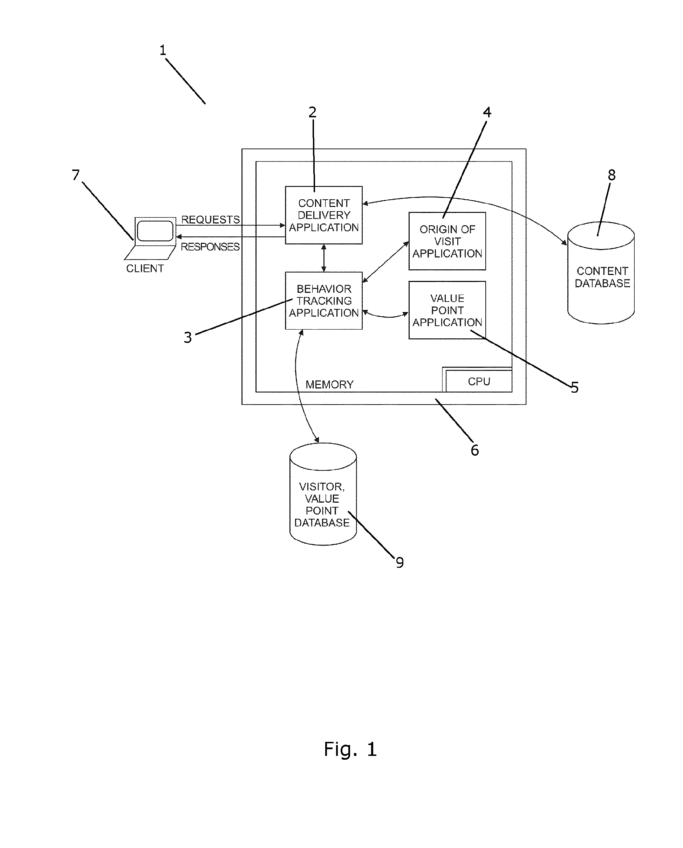

Fig. 1 is a diagrammatic view of a system 1 according to an embodiment of the invention. The system 1 is suited for being used for analysing traffic on a website. The system 1 comprises a content delivery application 2, a behaviour tracking application 3, an origin of visit application 4 and a value point application 5, all residing on a server 6.

A visitor accesses the content of the website from a client device 7, and the content delivery application 2 delivers content to the client device 7 upon request from the visitor, thereby allowing the visitor to view desired content and/or perform desired actions within the website. The content is supplied to the content delivery application 2 by a content database 8. In Fig. 1 the client device 7 is illustrated as a personal computer (PC), but it should be noted that the client device 7 could alternatively be a cell phone, a tablet, or any other suitable kind of client device allowing the visitor to access the website.

While the visitor navigates the website, the behaviour tracking application 3 monitors the navigations and/or actions performed by the visitor. During this, the behaviour tracking application 3 and the value point application 5 in cooperation accumulate value points for the visit. The value points are accumulated in accordance with the content viewed by the visitor and/or actions performed by the visitor during the visit. Previously, the content of the website has been associated with value point settings reflecting the value generated for the website owner when a visitor encounters specific content of the website. Thus, when a visitor views a specific piece of content or performs a specific action, value points corresponding to the viewed content or performed action are added to the value point score for the visit. Accordingly, when the visit is completed, an accumulated value point score has been obtained, and the accumulated value point score represents the value generated for the website owner during the visit.

Simultaneously, the behaviour tracking application 3 and the origin of visit application 4 in cooperation register an origin of the visit. The origin of the visit provides information regarding where the traffic came from. It may, e.g., be a specific search engine, a direct entry via the browser, following a link in a web advertisement, following a link in an e-mail campaign, following a link from a blog, etc.

The accumulated value point score and the origin of the visit are stored together in a visitor, value point database 9. Accordingly, the stored visit data provides correlated information regarding accumulated value points and the origin of the visit, i.e. where the traffic came from. Thereby the stored data provides information regarding where the accumulated value came from, as well as which origins of visit generated no value or only very little value for the website owner.

In the visitor, value point database 9, the stored accumulated value point scores and origins of the visit are categorised in accordance with two or more predefined categories of origin. The categories of origin may, e.g., include various kinds of referral sites, such as search engines, blogs, web based advertisements, e-mail campaigns, etc. Alternatively or additionally, the categories of origin may include direct access to the website by typing the address of the website directly in the browser.

Accordingly, once the stored data has been categorised, the website owner has obtained information regarding which type of origin the generated value came from. This allows the website owner or manager to perform intelligent data mining or statistical analysis of the information. It is also possible for the website owner to identify which types of origin result in value for the website owner, and which types of origin do not.

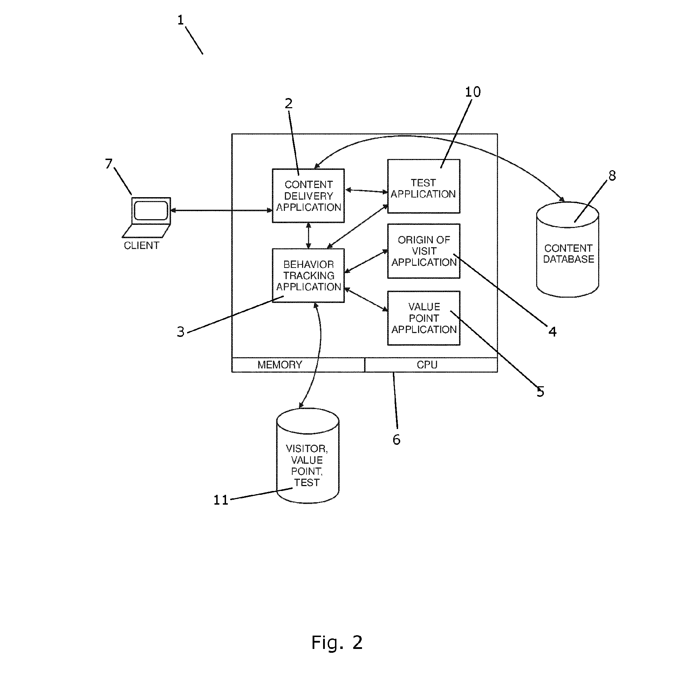

Fig. 2 is a diagrammatic view of a system according to another embodiment of the invention. The system 1 of Fig. 2 could advantageously form part of or cooperate with the system 1 illustrated in Fig. 1.

The system 1 of Fig. 2 comprises a content delivery application 2, a behaviour tracking application 3, an origin of visit application 4, a value point application 5 and a test application 10, all residing on a server 6. The system 1 of Fig. 2 is also suited for being used for analysing traffic on a website.

Similarly, to the embodiment described above with reference to Fig. 1, a visitor accesses the content of the website from a client device 7, and the content delivery application 2 delivers content to the client device 7 upon request from the visitor, thereby allowing the visitor to view desired content and/or perform desired actions within the website. The content is supplied to the content delivery application 2 by a content database 8. The behaviour tracking application 3 monitors the navigations and/or actions performed by the visitor, and value points are accumulated as described above with reference to Fig. 1. Furthermore, the origin of the visit is registered as described above with reference to Fig. 1.

In the system 1 of Fig. 2 the test application 10 supplies one or more tests to the content delivery application 2. The content delivery application 2 can thereby subject the visitor to one or more tests during the visit. Information regarding the test(s) which the visitor was subjected to is stored along with the accumulated value points and the origin of the visit in a visitor, value point, test database 11. Thereby the website owner obtains information regarding how the accumulated value points are affected by the visitor being subjected to a given test. The stored information regarding the test(s) may simply be that the visitor was subjected to the test(s). Additionally, information regarding the result of the test may be stored.

It should be noted that the system 1 shown in Fig. 2 may be operated in such a manner that, for some visits, only the accumulated value point and test information is stored in the visitor, value point, test database 11. In this case, the origin of the visit is not stored, and it might even not be registered.

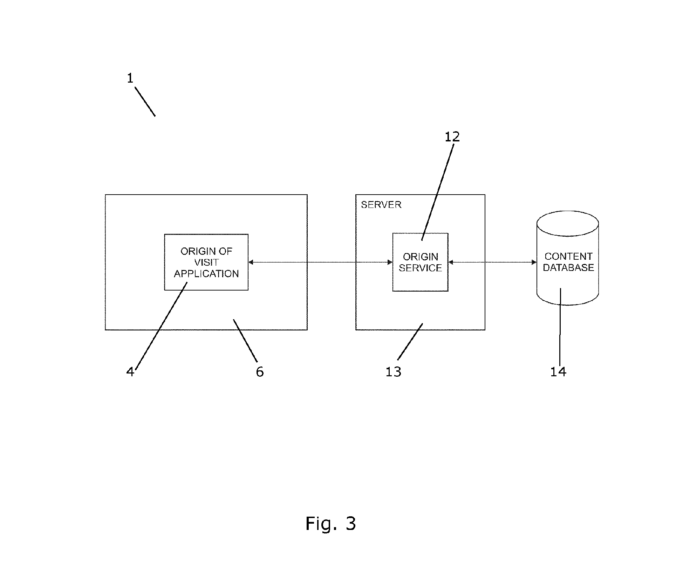

Fig. 3 is a diagrammatic view of a system according to yet another embodiment of the invention. The system 1 of Fig. 3 could advantageously form part of or cooperate with the system 1 illustrated in Fig. 1 or the system 1 illustrated in Fig. 2.

An origin of visit application 4 is residing on a server 6, e.g. the server 6 illustrated in Fig. 1 or Fig. 2. As described above, the server 6 can be accessed by a visitor visiting the website. An origin service 12 resides on a remote server 13. The remote server 13 may, e.g., be located at an external supplier, such as a hosting facility, a website administrator or a service provider providing analysis services for several website owners.

When the origin of visit application 4 receives information regarding the origin of the visit, it forwards this information to the origin service 12. Based on previous experience and knowledge, e.g. stored in a content database 14, the origin service 12 determines which category the origin of the visit belongs to. This information is returned to the origin of visit application 4, and the origin of visit application 4 is thereby capable of categorising the origin of the visit.

The origin service 12 may be used for determining the category of the origin of each visit. As an alternative, the origin service 12 may be used only when the origin of visit application 4 is not capable of determining the category of the origin of the visit.

One advantage of the system 1 of Fig. 3 is that the origin service 12 will most likely categorise significantly more origins than corresponding to visits to a single website. Therefore the origin service 12 is more likely to be able to recognise a given origin and thereby be able to categorise the origin correctly.

In the case that the origin service 12 is in doubt with respect to the category of a given origin, a request may be referred back to the origin of visit application 4. The owner or manager of the website may then categorise the origin of the visit manually. This information may then be supplied to the origin service 12, and the origin service 12 will then be capable of categorising this origin the next time it occurs, possibly from a different website. Thereby fast and accurate categorisation can be obtained.

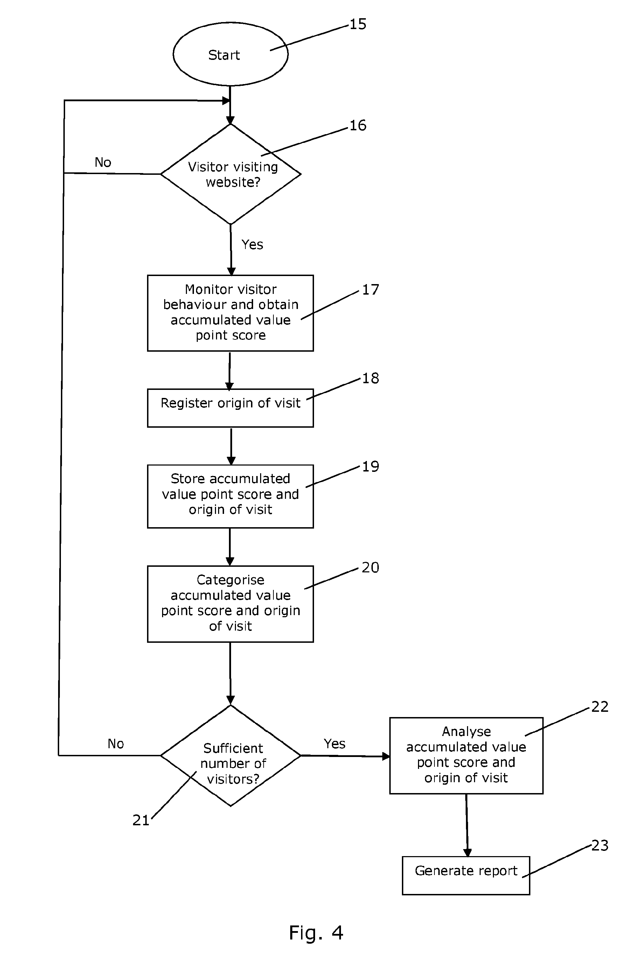

Fig. 4 is a flow diagram illustrating a method according to an embodiment of the invention. The process is started at step 15. At step 16 it is investigate whether or not a visitor is visiting the website. If this is not the case, the process is returned to step 16, i.e. the website is monitored until a visitor is detected.

If step 16 reveals that a visitor is visiting the website, the behaviour of the visitor is monitored at step 17. This results in an accumulated value point score being obtained. The value points are accumulated in accordance with content viewed by the visitor and actions performed by the visitor, and in accordance with predefined value point settings associated with the content of the website. The value point settings have been assigned to the content previously, e.g. when the content was created, by the website owner or manager. The value point settings are selected in such a manner that they reflect value generated for the website owner when a visitor views specific content or performs specific actions. When a visitor visits the website, a value point score is accumulated by continuously adding values defined by the value point settings. Thus, when a visitor views a specific piece of content or performs a specific action, the value point setting associated with that specific piece of content or action is added to the value point score of the visit. When the visit is completed, an accumulated value point score has been generated, and the accumulated value point score reflects the total value generated for the website owner during the visit.

At step 18 the origin of the visit is registered. The origin of the visit provides information regarding where the traffic came from. It may, e.g., be a specific search engine, a direct entry via the browser, following a link in a web advertisement, following a link in an e-mail campaign, following a link from a blog, etc.

At step 19 the accumulated value point score and the origin of the visit are stored in a storage device. Thus, correlated information regarding the obtained accumulated value point score and the origin of the visit is stored. This provides information for the website owner or manager regarding where the value generated for the website owner came from.

At step 20 the accumulated value point score and the origin of the visit are categorised according to type of origin in accordance with two or more predefined categories of origin. The categories of origin may, e.g., be referrals from search engines, referrals from e-mail campaigns, links from web advertisements, links from blogs, etc. Furthermore, one category may be 'not referral', i.e. all traffic which was not referred to the website, such as the visitor typing the address of the website directly into the browser. Thereby the website owner obtains information regarding which kinds of origin of the visits generate value for the website owner and which do not.

At step 21 it is investigated whether or not a sufficient number of visitors have visited the website, i.e. whether or not a sufficient number of categorised accumulated value point scores and origins of visits have been obtained. If this is not the case, the process is returned to step 16 in order to obtain further accumulated value point scores and origins of visits.

In the case that step 21 reveals that a sufficient number of visitors have visited the website, the categorised accumulated value point scores and origins of visits are analysed at step 22. In the present context the term 'sufficient' should be interpreted to mean that the number of visitors having visited the website is high enough to allow statistical analysis to be performed on the obtained data. For instance, the number of visitors could correspond to a given fraction of a given population of visitors, the fraction providing an acceptable confidence level in the subsequent analysis. The analysis may reveal how the obtained accumulated value point scores are distributed among the various categories of origin of the visit. The analysis may further reveal how the accumulated value point scores are distributed among various origins of visit within the individual categories. Finally, a report is generated at step 23. The report presents the result of the analysis performed at step 22, and thereby provides valuable information to the website owner or manager regarding where the generated value for the website owner came from.

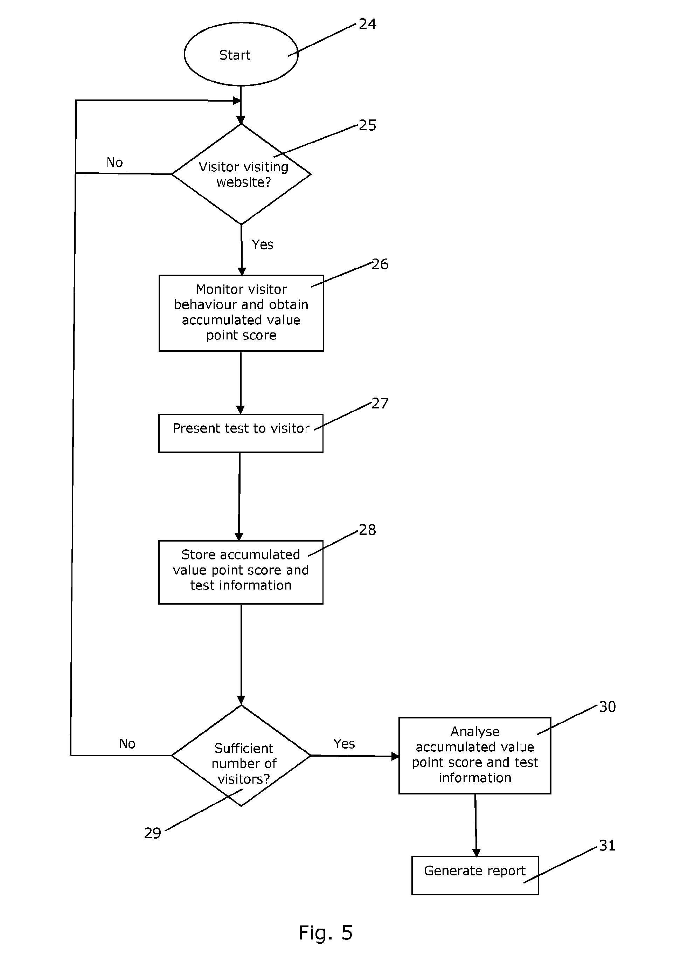

Fig. 5 is a flow diagram illustrating a method according to another embodiment of the invention. The method illustrated in the flow diagram of Fig. 5 may, e.g., be performed in addition to and/or in cooperation with the method illustrated in the flow diagram of Fig. 4. Alternatively, the method illustrated in Fig. 5 may be performed separately.

In the flow diagram of Fig. 5, the process is started at step 24. At step 25 it is investigated whether or not a visitor is visiting the website. If this is not the case, the process is returned to step 25, i.e. the website is monitored until a visitor is detected.

If step 25 reveals that a visitor is visiting the website, the behaviour of the visitor is monitored at step 26. This results in an accumulated value point score being obtained. The accumulated value point score is obtained in accordance with content viewed by the visitor and actions performed by the visitor during the visit, and in accordance with predefined value point settings associated with the content of the website, e.g. in the manner described above with reference to Fig. 4. Accordingly, the obtained accumulated value point score reflects the value generated for the website owner during the visit.

At step 27 the visitor is subjected to a test. The test forms part of the content of the website. At step 28 the accumulated value point score is stored along with test information in a storage device. The test information may simply be that the visitor was subjected to a specific test. In addition, the test information may include information regarding the result of the test and/or whether or not the visitor completed the test. Thus, the website owner or manager obtains information regarding how a specific test affects the value point score of a visit. If it turns out that presenting a visitor to a specific test results in a decreased value point score, then the website owner or manager may consider adjusting or removing that test from the website. On the other hand, if it turns out that a specific test has a beneficial effect on the accumulated value point score of a visit, the website owner or manager may consider adjusting other tests of the website in order to make them more similar to the beneficial test, and/or the website owner or manager may consider adjusting the website in such a manner that more visitors are encouraged to take the beneficial test.

At step 29 it is investigated whether or not a sufficient number of visitors have visited the website, i.e. whether or not a sufficient number of accumulated value point scores and test information have been obtained. If this is not the case, the process is returned to step 25 in order to obtain further accumulated value point scores and test information.

In the case that step 29 reveals that a sufficient number of visitors have visited the website, the accumulated value point scores and test information are analysed at step 30. As mentioned above, the analysis may reveal how various tests affect the accumulated value point scores, thereby enabling the website owner or manager to adjust the website and/or individual tests on the website in order to increase the value generated for the website owner by the visitors. Finally, a report is generated at step 31. The report presents the result of the analysis performed at step 30, and thereby provides valuable information to the website owner or manager regarding how various tests affect the accumulated value point scores.

## Claims

1. A method for analysing traffic on a website, the website being arranged on a server, the method comprising the steps of:
- allowing a visitor to visit the website,
- monitoring navigations and/or actions performed by the visitor during the visit while accumulating value points in accordance with content viewed by the visitor and actions performed by the visitor, and in accordance with predefined value point settings associated with content of the website, thereby obtaining an accumulated value point score for the visit,
- registering an origin of the visit, leading the visitor to the website,
- storing the accumulated value point score along with the registered origin of the visit in a storage device of the server, and
- categorising the stored accumulated value point score and the origin of the visit according to type of origin in accordance with two or more predefined categories of origin.

2. A method according to claim 1, wherein the origin of the visit includes a referral which referred the visitor to the website.

3. A method according to claim 2, further comprising the steps of:
- registering one or more search keywords applied by the visitor, and
- storing the registered search keyword(s) along with the accumulated value point score and the registered origin of the visit.

4. A method according to any of the preceding claims, further comprising the steps of:
- registering visit information, and
- storing the registered visit information along with the accumulated value point score and the registered origin of the visit.

5. A method according to any of the preceding claims, further comprising the steps of:
- analysing stored and categorised accumulated value point scores and origins of the visits originating from a plurality of visits to the website, and
- generating a report providing information regarding value point scores originating from the predefined categories of origin.

6. A method according to claim 5, further comprising the step of generating at least one sub-report providing information regarding value point scores originating from various origins of visits within a predefined category of origin.

7. A method according to any of the preceding claims, further comprising the step of storing the categories of origin in the storage device of the server.

8. A method according to any of the preceding claims, wherein the predefined value point settings reflect value obtained by the owner of the website due to navigations and/or actions performed by the visitor during the visit.

9. A method according to any of the preceding claims, further comprising the steps of:
- the visitor being subjected to one or more tests during the visit, and
- storing information regarding the test(s) which the visitor was subjected to in the storage device of the server along with the accumulated value point score and the registered origin of the visit.

10. A method according to claim 9, further comprising the steps of:
- analysing stored test information and value point scores originating from a plurality of visits, and
- generating a report providing information regarding a relationship between accumulated value point scores and various test cases.

11. A method according to any of the preceding claims, wherein the categorising step is performed on a remote server, the method further comprising the step of communicating the registered origin of the visit to the remote server.

12. A method for analysing traffic on a website, the website being arranged on a server, the method comprising the steps of:
- allowing a visitor to visit the website,
- monitoring navigations and/or actions performed by the visitor during the visit while accumulating value points in accordance with content viewed by the visitor and actions performed by the visitor, and in accordance with predefined value point settings associated with content of the website, thereby obtaining an accumulated value point score for the visit,
- the visitor being subjected to one or more tests during the visit, and
- storing the accumulated value point score along with information regarding the test(s) which the visitor was subjected to in a storage device of the server.

13. A method according to claim 12, further comprising the steps of:
- analysing stored test information and value point scores originating from a plurality of visits, and
- generating a report providing information regarding a relationship between accumulated value point scores and various test cases.

14. A system for analysing traffic on a website arranged on a server, the system comprising:
- a monitoring module adapted to monitor navigations and/or actions performed by a visitor during a visit to the website, said monitoring module further being adapted to accumulate value points in accordance with content viewed by the visitor and actions performed by the visitor, and in accordance with predefined value point settings associated with content of the website, thereby obtaining an accumulated value point score for the visit, and being adapted to register an origin of the visit, leading the visitor to the website,
- a storage device arranged on the server for storing accumulated value point scores along with registered origin of the visit, for each visit, and
- a categorising module adapted to categorise stored accumulated point scores and origins of visits according to type of origin in accordance with two or more predefined categories of origin.

15. A system according to claim 14, wherein the categorising module forms part of the monitoring module.

16. A system according to claim 14 or 15, further comprising an analysing module adapted to analyse stored and categorised accumulated value point scores and origins originating from a plurality of visitors.

17. A system according to claim 16, wherein the analysing module forms part of the monitoring module.

18. A system according to any of claims 14-17, said system residing on the server having the website arranged thereon.

19. A system according to any of claims 14-18, wherein the categorising module is arranged on a remote server, the system further comprising communication connections between the server having the website arranged thereon and the remote server, said communication connections allowing the monitoring module to communicate with the remote server and the categorising module.
